# FASCICULE DE BREVET EUROPEEN

(11) **EP 0 880 291 B1**
(45) Date de publication et mention de la délivrance du brevet: **07.09.2005**
(21) Numéro de dépôt: 98401220.3
(22) Date de dépôt: 20.05.1998
(51) Int. Cl.: H04Q 3/00

(54) **Représentation graphique d'un réseau**
Graphische Darstellung eines Netzwerks
Graphical representation of a network

(30) Priorité: 23.05.1997 FR 9706310
(43) Date de publication de la demande: 25.11.1998
(73) Titulaire: FRANCE TELECOM, 75015 Paris (FR)
(72) Inventeur: Bonnet, Dominique, 92330 Sceaux (FR)
(74) Mandataire: Loisel, Bertrand

(56) Documents cités:
- EP-A- 0 412 692
- EP-A- 0 460 843
- WETMORE R: "AT&T'S WORLD-CLASS NETWORK TRAFFIC MANAGEMENT SYSTEM" AT & T TECHNOLOGY, vol. 6, no. 3, 1 janvier 1991, pages 38-43, XP000264046
- HIROKO FUJI ET AL: "DUALQUEST: REAL-TIME BIFOCAL NETWORK VISUALIZATION SYSTEM" IEICE TRANSACTIONS ON COMMUNICATIONS, vol. E78-B, no. 1, 1 janvier 1995, pages 68-73, XP000495106
- SCHADE L ET AL: "MODELLIERUNG, PLANUNG UND OPTIMIERUNG VON TELEKOMMUNIKATIONSNETZEN MIT DEM PROGRAMMSYSTEM NETWORKS" IK INGENIEUR DER KOMMUNIKATIONSTECHNIK, vol. 44, no. 3, 1 mai 1994, pages 33-37, XP000494311

## Description

La présente invention concerne le domaine de la représentation graphique des réseaux, et plus précisément un procédé pour visualiser dans une telle représentation un ensemble de chemins disponibles pour réaliser un acheminement entre deux noeuds du réseau.

Les réseaux représentés peuvent être de nature très diverse. L'exemple plus particulièrement envisagé par la demanderesse se rapporte aux réseaux de télécommunication. D'autres exemples seraient des réseaux de transport d'énergie ou de distribution de fluide.

De façon naturelle, la représentation graphique d'un tel réseau comprend des symboles désignant des noeuds du réseau (par exemple des commutateurs dans le cas d'un réseau de télécommunication), reliés entre eux par des arcs désignant des liaisons élémentaires existant entre noeuds du réseau (par exemple des faisceaux de câbles, de fibres optiques ou hertziens...).

Lorsque le réseau comporte de nombreux noeuds et de nombreuses liaisons, ce qui est très fréquemment le cas, sa représentation devient complexe et difficile à lire. En particulier, la visualisation des chemins dont on dispose pour transporter un flux (d'informations, de signal, d'énergie, de fluide...) d'un noeud à un autre est un problème difficile à résoudre de façon claire et non ambigüe.

C'est un tel ensemble de chemins disponibles pour transporter un flux d'un premier noeud à un second noeud du réseau qu'il est proposé de visualiser selon l'invention. Cet ensemble de chemins obéit aux règles topologiques suivantes :
- chaque chemin de l'ensemble comporte, entre le premier noeud et le second noeud, une liaison élémentaire ou une succession de liaisons élémentaires ayant chacune un noeud de départ et un noeud d'arrivée respectifs,
- le premier noeud constitue le noeud de départ d'une liaison élémentaire de chaque chemin,
- le second noeud constitue le noeud d'arrivée d'une liaison élémentaire de chaque chemin, et
- chaque noeud d'arrivée d'une liaison élémentaire d'un chemin de l'ensemble autre que ledit second noeud constitue le noeud de départ d'une autre liaison élémentaire dudit chemin.

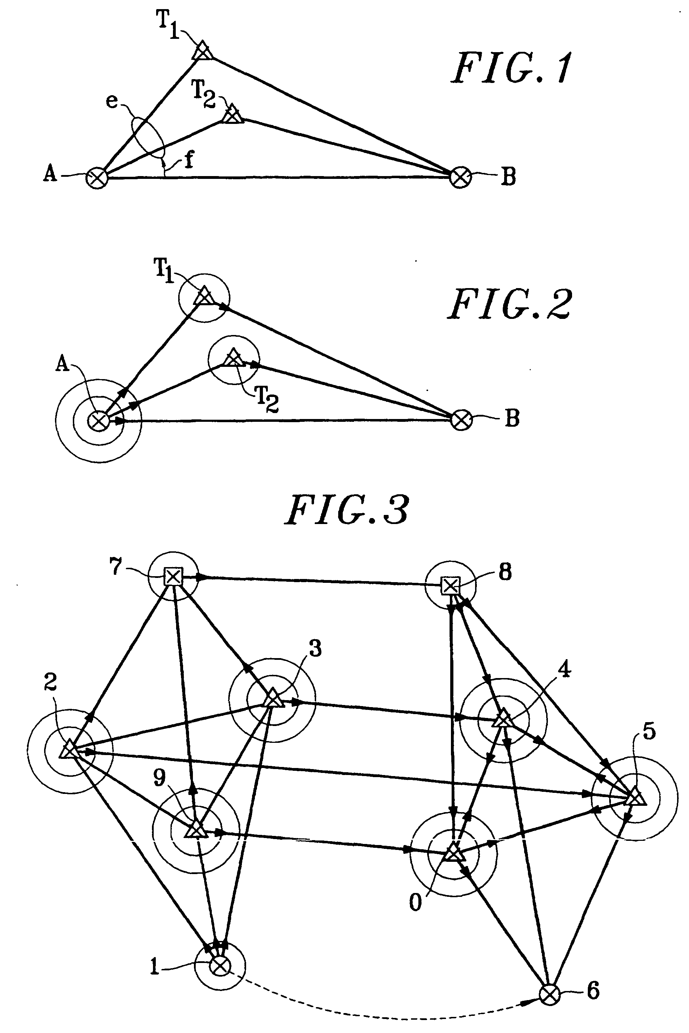

En outre, il peut être nécessaire de faire apparaître sur la visualisation de l'ensemble de chemins certaines règles d'acheminement qui s'appliquent dans cet ensemble. Parmi ces règles, on peut citer les partages de charge ainsi que les comportements à adopter en cas de débordement sur une liaison. La figure 1 illustre une façon traditionnelle de représenter un ensemble de chemins entre un noeud A et un noeud B avec de telles règles. Dans cet exemple, l'acheminement normal entre les noeuds A et B consiste à emprunter la liaison directe AB. Mais en cas de débordement de capacité sur cette liaison directe, les flux à acheminer du noeud A vers le noeud B pourront emprunter soit le chemin AT₁B, soit le chemin AT₂B. Le partage de la charge de débordement entre les liaisons élémentaires AT₁ et AT₂ est représenté par l'ellipse e dessinée autour des arcs désignant ces deux liaisons élémentaires, et la flèche f issue de l'arc AB est un indicateur de débordement permettant de visualiser le comportement approprié en cas de débordement sur la liaison AB.

La technique de visualisation illustrée par la figure 1 présente plusieurs limitations pratiques. Pour certaines dispositions des noeuds dans la représentation, l'acheminement est incompréhensible. Par exemple, sur la figure 1, si le noeud B est placé entre les noeuds T₁ et T₂, la représentation de l'acheminement n'est plus compréhensible. Or, on n'a pas toujours la possibilité de modifier la position des noeuds pour éviter de telles ambiguités : c'est notamment le cas lorsque la position des noeuds traduit la géographie des sites du réseau. D'autre part, cette technique de visualisation ne rattache pas un choix d'acheminement au noeud à la sortie duquel s'effectue ce choix, mais aux arcs représentant les liaisons concernées. Ceci rend difficile le suivi des chemins empruntés par le flux de bout en bout. Une autre limitation est qu'il n'est pas possible de faire apparaître clairement le fait qu'un choix d'acheminement en sortie d'un noeud puisse être conditionné par la liaison par laquelle le flux a atteint ce noeud.

Le document **"AT&T's World Class Network Traffic Management System"** décrit un mode de représentation de commutateurs et de liens entre certains commutateurs, qui donne des informations en temps réel sur les problèmes apparaissant dans un réseau de télécommunication. Ces problèmes sont signalés par un changement de couleur de la portion de réseau impactée. En revanche, cette représentation des problèmes survenus sur le réseau ne donne aucune indication sur les chemins susceptibles d'être suivis par un flux de données entre deux noeuds du réseau.

Un but de la présente invention est d'améliorer les techniques de visualisation de chemins dans les représentations graphiques de réseaux en leur donnant à la fois une meilleure visibilité et une plus grande richesse de représentation.

L'invention propose ainsi un procédé de visualisation d'un ensemble de chemins tel que défini ci-dessus et conforme à la revendication 1.

Chaque périmètre entourant un noeud de départ matérialise un choix d'acheminement en sortie de ce noeud. Par exemple, un partage de charge entre deux liaisons élémentaires ayant ce noeud comme noeud de départ sera aisément visualisé par la présence d'un repère aux intersections entre ce périmètre et les arcs désignant ces liaisons élémentaires.

De façon avantageuse, la représentation graphique du réseau est visualisable par des moyens informatiques. La sélection d'un périmètre peut alors se faire à l'aide d'une interface graphique desdits moyens informatiques, comme un clic de souris sur le périmètre par exemple.

Les priorités d'acheminement et les indicateurs de débordement peuvent être visualisés en plaçant plusieurs périmètres concentriques autour des noeuds concernés. Un mode d'exécution préféré du procédé selon l'invention permet ainsi la visualisation d'un ensemble de chemins tel qu'au moins un noeud du réseau constitue un noeud de départ commun à plusieurs liaisons élémentaires parmi lesquelles au moins une liaison principale est prioritaire par rapport à au moins une liaison auxiliaire, à l'aide des opérations suivantes : entourer le symbole désignant ledit noeud de départ commun de deux périmètres concentriques ; placer le repère relatif à chaque liaison principale ayant ledit noeud de départ commun à l'intersection entre l'arc désignant ladite liaison principale et l'un des périmètres concentriques ; et placer le repère relatif à chaque liaison auxiliaire ayant ledit noeud de départ commun à l'intersection entre l'arc désignant ladite liaison auxiliaire et l'autre périmètre concentrique.

Ce processus est aisément généralisable à un nombre quelconque de niveaux de priorité en sortie du noeud de départ commun. Il suffit de tracer autant de périmètres concentriques qu'il y a de niveaux de priorité, par exemple des cercles de diamètre croissant (ou décroissant) avec la priorité. Un débordement de capacité se traduit alors par le passage d'un cercle à celui de diamètre immédiatement supérieur (ou inférieur). On a donc une grande flexibilité pour la représentation des priorités et des débordements de capacité. La clarté de cette représentation est obtenue au moyen d'éléments graphiques très faciles à utiliser et à visualiser, et elle n'est pas affectée par les positions relatives des noeuds concernés, contrairement à la technique de visualisation illustrée par la figure 1.

Avantageusement, l'invention permet également la représentation de contraintes d'acheminement telles que des contraintes amont. Ceci permet d'éviter que la visualisation d'un ensemble de chemins s'accompagne automatiquement de la visualisation d'autres chemins n'appartenant pas à cet ensemble.

On dit qu'un noeud fait l'objet d'une contrainte amont si un choix d'acheminement en sortie de ce noeud est conditionné par la liaison élémentaire par laquelle le flux a atteint ce noeud. En termes de définition de l'ensemble de chemins à visualiser, une condition de contrainte amont correspond au fait que l'ensemble de chemins comprend au moins des premier et second chemins passant par un même noeud contraint et comportant chacun une liaison élémentaire d'arrivée respective dont ledit noeud contraint constitue le noeud d'arrivée et une liaison élémentaire de départ respective dont ledit noeud contraint constitue le noeud de départ, et qu'aucun chemin de l'ensemble à visualiser ne comporte à la fois la liaison élémentaire d'arrivée du premier chemin et la liaison élémentaire de départ du second chemin.

Sur un périmètre entourant le symbole désignant le noeud contraint et ayant un repère à l'intersection avec l'arc désignant la liaison élémentaire de départ du second chemin, on place alors un repère d'un autre type à l'intersection avec l'arc désignant la liaison élémentaire d'arrivée du second chemin, et on ne place aucun repère de l'autre type à l'intersection avec l'arc désignant les liaisons élémentaires d'arrivée du premier chemin.

En l'absence de telles dispositions, la représentation graphique du réseau laisserait penser que la liaison élémentaire de départ du second chemin peut être empruntée quel que soit le trajet amont, ce qui n'est pas conforme aux règles d'acheminement souhaitées.

D'autres particularités et avantages de la présente invention apparaîtront dans la description ci-après d'exemples de réalisation non limitatifs, en référence aux dessins annexés, dans lesquels :
- la figure 1 est une représentation graphique d'un réseau selon une technique antérieure ; et
- les figures 2 et 3 sont deux représentations graphiques de réseaux pouvant être obtenues par la mise en oeuvre du procédé selon l'invention.

Le procédé selon l'invention est généralement mis en oeuvre dans un système informatique permettant la représentation graphique de réseaux. Ce système constitue typiquement un outil de simulation ou d'aide à la conception pour l'architecte ou le gestionnaire du réseau. Les représentations graphiques produites peuvent être utilisées en tant que telles pour visualiser la structure et/ou les attributs du réseau. De manière avantageuse, leur affichage sur un écran d'ordinateur permet en outre à l'utilisateur, dans le cadre d'une interface-utilisateur orientée objet, de fournir au système les attributs d'acheminement au fur et à mesure de la construction du réseau.

A cet égard, le fait de tracer autour de chaque noeud du réseau constituant le noeud de départ d'une liaison élémentaire d'un chemin de l'ensemble à visualiser un périmètre, tel qu'un cercle, matérialisant un choix d'acheminement en sortie de ce noeud est d'une aide précieuse. Il suffira à l'utilisateur, à l'aide de son interface graphique, de sélectionner le périmètre en question (par exemple en cliquant à l'aide d'une souris) afin d'initier un dialogue avec le système lui permettant de définir ou de modifier les paramètres de ce choix d'acheminement, lesquels vont dicter les règles de comportement auxquelles devra obéir l'équipement du réseau situé au noeud en question. Comme c'est au niveau de ces équipements (des commutateurs dans le cas d'un réseau de télécommunication ou des équipements ayant des fonctions comparables d'acheminement dans le cas d'autres réseaux) que doivent être spécifiées les règles d'acheminement, le mode de représentation selon l'invention est pour l'utilisateur d'une commodité très supérieure à celui illustré par la figure 1 où les choix d'acheminement sont visualisés au niveau des arcs.

Les portions de programme utilisées pour tracer les périmètres et placer les repères adéquats autour des symboles désignant les noeuds du réseau ne posent aucune difficulté d'écriture dans le langage employé pour construire les représentations graphiques dans le système. Ces méthodes graphiques sont bien connues et ne seront pas décrites ici.

La figure 2 est une représentation graphique du même réseau que celui de la figure 1, visualisant le même ensemble de chemins allant du noeud A au noeud B. Le symbole désignant chaque noeud de départ à visualiser A, T₁, T₂ est entouré par un ou plusieurs périmètres, chaque périmètre étant un cercle dans l'exemple représenté.

En l'absence de relations de priorité entre les liaisons élémentaires sortant d'un noeud donné, le symbole représentant ce noeud T₁, T₂ est entouré par un seul cercle dont l'intersection avec la liaison sortante est pourvue d'un repère constitué dans l'exemple non limitatif représenté, par un triangle formant une flèche pointant à l'opposé du noeud en question.

Le noeud A est un noeud de départ commun à plusieurs liaisons élémentaires à visualiser. Parmi celles-ci, la liaison élémentaire AB est prioritaire, ce qui est visualisé par un repère pointant du symbole du noeud A vers celui du noeud B et placé à l'intersection entre l'arc AB et le cercle de plus petit diamètre entourant le noeud A, et les liaisons élémentaires AT₁ et AT₂ sont des liaisons auxiliaires partageant la charge de débordement de la liaison principale AB, ce qui est visualisé par deux repères pointant du symbole du noeud A vers ceux des noeuds T₁ et T₂ et placés aux intersections entre les arcs AT₁ et AT₂ et le cercle de plus grand diamètre entourant le symbole du noeud A.

On remarque que la clarté de la représentation du réseau et de la visualisation des chemins n'est en rien affectée si le noeud B se trouve situé entre les noeuds T₁ et T₂.

L'exemple moins schématique de la figure 3 montre la représentation graphique d'un réseau de dix noeuds désignés par les références numériques 0 à 9, et visualise l'ensemble de chemins pouvant être utilisés pour transporter un flux du noeud 1 vers le noeud 6, comme l'indique la flèche en pointillés.

Les noeuds 0, 4 et 5 sont des noeuds contraints. Les liaisons élémentaires 04 et 05 ne peuvent être empruntées en sortie du noeud 0 que par des flux parvenus au noeud 0 par la liaison élémentaire 80 ou 90. Pour visualiser cette condition sur le choix d'acheminement 04 ou 05 en sortie du noeud 0, des repères d'un autre type (dans l'exemple non limitatif représenté, des triangles formant une flèche pointant vers le noeud en question) sont placés aux intersections entre le cercle portant les repères des liaisons sortantes 04, 05 sur lesquelles porte ce choix d'acheminement et les arcs désignant les liaisons conditionnantes 80 et 90. La même méthode est appliquée pour les noeuds 4 et 5 : les liaisons élémentaires 40 et 45 ne peuvent être empruntées en sortie du noeud 4 que par des flux parvenus au noeud 4 par la liaison élémentaire 34 ou 84, et les liaisons élémentaires 50 et 54 ne peuvent être empruntées en sortie du noeud 5 que par des flux parvenus au noeud 5 par la liaison élémentaire 25 ou 85.

Dans la représentation graphique de la figure 3, l'ensemble de chemins visualisés se compose des chemins suivants : 1256, 1346, 1906, 12546, 12506, 13456, 13406, 19046, 19056, 1i7846, 1i7856, 1i7806, 1i78456, 1i78406, 1i78546, 1i78506, 1i78046 et 1i78056, avec i = 2,3 ou 9, les trois premiers chemins étant empruntés prioritairement, et les autres pouvant l'être en cas de débordement sur certaines liaisons élémentaires. Certains chemins (par exemple 134056) sont exclus de l'ensemble visualisé alors qu'ils ne pourraient pas l'être en l'absence de dispositions pour la mise en évidence des contraintes amont.

On constate que, malgré la relative complexité de cet ensemble visualisé, qui traduit la richesse des possibilités d'acheminement dont dispose le gestionnaire du réseau, la représentation graphique des acheminements reste claire et aisément modifiable par l'utilisateur. Il suffit à ce dernier de cliquer sur le symbole désignant un noeud ou sur le cercle ou périmètre désignant un choix d'acheminement fait au niveau d'un noeud pour pouvoir en modifier les paramètres de fonctionnement. D'autre part, la visualisation de l'ensemble de chemins n'a pas nécessité de faire disparaître de la représentation graphique globale du réseau certaines liaisons pouvant exister au sein du réseau sans toutefois faire partie de chemins de l'ensemble à visualiser. Tel est le cas des liaisons 23, 29 et 39 dans l'exemple représenté sur la figure 3.

## Revendications

1. Procédé de visualisation de chemins au sein d'une représentation graphique d'un réseau, cette représentation graphique comprenant des symboles désignant des noeuds (A,T1,T2,B ; 0-9) du réseau, reliés entre eux par des arcs désignant des liaisons élémentaires existant entre noeuds du réseau, dans lequel on visualise un ensemble de chemins disponibles pour transporter un flux d'un premier noeud (A; 1) à un second noeud (B ; 6) du réseau, cet ensemble étant tel que chaque chemin comporte, entre le premier noeud et le second noeud, une liaison élémentaire ou une succession de liaisons élémentaires ayant chacune un noeud de départ et un noeud d'arrivée respectifs, que le premier noeud constitue le noeud de départ d'une liaison élémentaire de chaque chemin, que le second noeud constitue le noeud d'arrivée d'une liaison élémentaire de chaque chemin, et que chaque noeud d'arrivée d'une liaison élémentaire d'un chemin de l'ensemble autre que ledit second noeud constitue le noeud de départ d'une autre liaison élémentaire dudit chemin, le procédé de visualisation dudit ensemble de chemins étant **caractérisé en ce qu'**il comprend les étapes suivantes :
- entourer chaque symbole désignant un noeud de départ d'au moins un périmètre respectif matérialisant un choix d'acheminement en sortie dudit noeud ;
- sélectionner au moins un périmètre entourant un symbole ; et
- placer un repère respectif à l'intersection entre ledit périmètre sélectionné et au moins un arc désignant une liaison élémentaire de l'ensemble de chemins ayant pour noeud de départ le noeud désigné par ledit symbole, ladite liaison élémentaire étant admise dans ledit choix d'acheminement en sortie dudit noeud.

2. Procédé selon la revendication 1, dans lequel la représentation graphique du réseau est visualisable par des moyens informatiques et dans lequel la sélection d'un périmètre entourant un symbole est effectuée par une opération réalisée à l'aide d'une interface graphique desdits moyens informatiques, telle qu'un clic de souris sur ledit périmètre.

3. Procédé de visualisation de chemins selon la revendication 1 ou 2, dans lequel l'ensemble de chemins est tel qu'au moins un noeud (A ; 0,2-5,9) du réseau constitue un noeud de départ commun à plusieurs liaisons élémentaires parmi lesquelles au moins une liaison principale est prioritaire par rapport à au moins une liaison auxiliaire, et dans lequel on entoure le symbole désignant ledit noeud de départ commun de deux périmètres concentriques, on sélectionne un premier des deux périmètres concentriques, on place le repère relatif à chaque liaison principale ayant ledit noeud de départ commun à l'intersection entre l'arc désignant ladite liaison principale et ledit premier périmètre concentrique sélectionné, on sélectionne le second des deux périmètres concentriques et on place le repère relatif à chaque liaison auxiliaire ayant ledit noeud de départ commun à l'intersection entre l'arc désignant ladite liaison auxiliaire et ledit second périmètre concentrique sélectionné.

4. Procédé de visualisation de chemins selon l'une quelconque des revendications précédentes, dans lequel l'ensemble de chemins comprend au moins des premier et second chemins passant par un même noeud contraint (0,4,5) et comportant chacun une liaison élémentaire d'arrivée respective dont ledit noeud contraint constitue le noeud d'arrivée et une liaison élémentaire de départ respective dont ledit noeud contraint constitue le noeud de départ, et aucun chemin de l'ensemble à visualiser ne comporte à la fois la liaison élémentaire d'arrivée du premier chemin et la liaison élémentaire de départ du second chemin, et dans lequel, lors d'une sélection du périmètre entourant le symbole désignant le noeud contraint et ayant un repère à l'intersection avec l'arc désignant la liaison élémentaire de départ du second chemin, on place en outre, sur ledit périmètre sélectionné, un repère d'un autre type à l'intersection avec l'arc désignant la liaison élémentaire d'arrivée du second chemin, et on ne place aucun repère de l'autre type à l'intersection avec l'arc désignant la liaison élémentaire d'arrivée du premier chemin.

## Patentansprüche

1. Verfahren zur Visualisierung von Wegen in einer graphischen Darstellung eines Netzes, wobei diese graphische Darstellung Symbole umfasst, welche Knoten (A, T1, T2, B; 0-9) bezeichnen, die durch Bogen miteinander verbunden sind, welche die zwischen Knoten des Netzes vorhandenen Elementarverbindungen bezeichnen, bei welchem eine Gesamtheit von Wegen visualisiert wird, die zum Transportieren eines Flusses von einem ersten Knoten (A, 1) zu einem zweiten Knoten (B; 6) des Netzes verfügbar sind, wobei diese Gesamtheit derart gebildet ist, dass jeder Weg zwischen dem ersten Knoten und dem zweiten Knoten eine Elementarverbindung oder eine Folge von Elementarverbindungen aufweist, von welchen jede jeweils einen Anfangsknoten und einen Endknoten aufweist, dass der erste Knoten den Anfangsknoten einer Elementarverbindung jedes Wegs bildet, dass der zweite Knoten den Endknoten einer Elementarverbindung jedes Wegs bildet und dass jeder von dem zweiten Knoten verschiedene Endknoten einer Elementarverbindung eines Wegs der Gesamtheit den Anfangsknoten einer weiteren Elementarverbindung des Wegs bildet, wobei das Verfahren zur Visualisierung der Gesamtheit der Wege **dadurch gekennzeichnet ist, dass** es die folgenden Schritte umfasst:
• Umgeben jedes Symbols, welches einen Anfangsknoten bezeichnet, mit zumindest einem entsprechenden Umkreis, der eine Leitwegwahl am Ausgang des Knotens verkörpert;
• Auswählen zumindest eines Umkreises, der ein Symbol umgibt; und
• Setzen einer Markierung, welche der Schnittstelle zwischen dem ausgewählten Umkreis und zumindest einem Bogen entspricht, der eine Elementarverbindung der Gesamtheit der Wege bezeichnet, deren Anfangsknoten der durch das Symbol bezeichnete Knoten ist, wobei die Elementarverbindung bei der Leitwegwahl am Ausgang des Knotens zugelassen ist.

2. Verfahren nach Anspruch 1, bei welchem die graphische Darstellung des Netzes mittels Informatik-Mitteln visualisierbar ist und bei welchem die Wahl eines ein Symbol umgebenden Umkreises mittels eines Vorgangs durchgeführt wird, der mit Hilfe einer graphischen Schnittstelle der Informatik-Mittel, wie beispielsweise eines Maus-Klicks auf den Umkreis, erzielt wird.

3. Verfahren zur Visualisierung von Wegen nach Anspruch 1 öder 2, bei welchem die Gesamtheit der Wege derart gebildet ist, dass zumindest ein Knoten (A, 0, 2-5, 9) des Netzes einen Anfangsknoten bildet, der mehreren Elementarverbindungen gemeinsam ist, unter welchen zumindest eine Hauptverbindung in Bezug auf zumindest eine Hilfsverbindung vorrangig ist, und bei welchem man das Symbol, welches den gemeinsamen Anfangsknoten bezeichnet, mit zwei konzentrischen Umkreisen umgibt, man einen ersten der beiden konzentrischen Umkreise auswählt, man die Markierung in Bezug auf jede Hauptverbindung, welche den gemeinsamen Anfangsknoten aufweist, an der Schnittstelle zwischen dem die Hauptverbindung bezeichnenden Bogen und dem ausgewählten ersten konzentrischen Umkreis setzt, man den zweiten der beiden konzentrischen Umkreise auswählt, und man die Markierung in Bezug auf jede Hilfsverbindung, welche den gemeinsamen Anfangsknoten aufweist, an der Schnittstelle zwischen dem die Hilfsverbindung bezeichnenden Bogen und dem ausgewählten zweiten konzentrischen Umkreis setzt.

4. Verfahren zur Visualisierung von Wegen nach einem der vorstehenden Ansprüche, bei welchem die Gesamtheit der Wege zumindest erste und zweite Wege umfasst, die durch ein und denselben Zwangsknoten (0, 4, 5) verlaufen und von denen jeder jeweils eine Elementarendverbindung einschließt, deren Zwangsknoten den Endknoten bildet, und jeweils eine Elementaranfangsverbindung, deren Zwangsknoten den Anfangsknoten bildet, und kein Weg der zu visualisierenden Gesamtheit zugleich die Elementarendverbindung des ersten Wegs und die Elementaranfangsverbindung des zweiten Wegs einschließt, und bei welchem man bei einer Auswahl des Umkreises, welcher das den Zwangsknoten bezeichnende Symbol umgibt und eine Markierung an der Schnittstelle mit dem Bogen aufweist, welcher die Elementaranfangsverbindung des zweiten Wegs bezeichnet, ferner auf dem ausgewählten Umkreis bei der Schnittstelle mit dem Bogen, welcher die Elementarendverbindung des zweiten Wegs bezeichnet, eine Markierung eines anderen Typs setzt und man bei der Schnittstelle mit dem Bogen, welcher die Elementarendverbindung des ersten Wegs bezeichnet, keine Markierung des anderen Typs setzt.

## Claims

1. Method for depicting paths within a graphical representation of a network, said graphical representation comprising symbols designating nodes (A,T1,T2,B ; 0-9) of the network, the symbols being connected together by arcs designating elementary links existing between nodes of the network, in which a set of paths available for transporting a stream from a first node (A; 1) to a second node (B; 6) of the network is depicted, said set being such that each path includes, between the first node and the second node, an elementary link or a succession of elementary links each having a respective departure node and a respective arrival node, said first node constitutes the departure node of an elementary link of each path, said second node constitutes the arrival node of an elementary link of each path, and each arrival node of an elementary link of a path of the set other than said second node constitutes the departure node of another elementary link of said path, the method for depicting said set of paths being **characterized in that** it comprises the following steps:
- surrounding each symbol designating a departure node with at least one respective perimeter materializing a choice of route on exit from said node;
- selecting at least one perimeter surrounding a symbol; and
- placing a respective flag at the intersection between said selected perimeter and at least one arc designating an elementary link of the set of paths having the node designated by said symbol as a departure node, said elementary link being admitted in said choice of route on exit from said node.

2. Method according to claim 1, wherein the graphical representation of the network can be depicted by computer means and wherein the selection of one perimeter surrounding a symbol is done by an operation performed using a graphical interface of said computer means, such as a mouse click on said perimeter.

3. Method for depicting paths according to claim 1 or 2, wherein the set of paths is such that at least one node (A ; 0,2-5,9) of the network constitutes a departure node common to several elementary links, among which at least one main link has priority over at least one auxiliary link, and wherein the symbol designating said common departure node is surrounded by two concentric perimeters, a first of the two concentric perimeters is selected, the flag relating to each main link having said common departure node is placed at the intersection between the arc designating said main link and said first selected concentric perimeter, the second of the two concentric perimeters is selected and the flag relating to each auxiliary link having said common departure node is placed at the intersection between the arc designating said auxiliary link and said second selected concentric perimeter.

4. Method for depicting paths according to any one of the foregoing claims, wherein the set of paths comprises at least first and second paths passing through a constrained node (0,4,5) and each including a respective elementary arrival link of which said constrained node constitutes the arrival node and a respective elementary departure link of which said constrained node constitutes the departure node, and wherein no path of the set to be depicted simultaneously includes the elementary arrival link of the first path and the elementary departure link of the second path, and wherein, when selecting the perimeter surrounding the symbol designating the constrained node and having a flag at the intersection with the arc designating the elementary departure link of the second path, a flag of another type is further placed, on said selected perimeter, at the intersection with the arc designating the elementary arrival link of the second path, and no flag of the other type is placed at the intersection with the arc designating the elementary arrival link of the first path.
